# EUROPEAN PATENT APPLICATION

(11) **EP 1 517 256 A2**
(43) Date of publication of application: **23.03.2005**
(21) Application number: 04017818.8
(22) Date of filing: 28.07.2004
(51) Int. Cl.: G06F 17/60, G09F 3/00, G06K 19/07

(54) **Label provided in the form of a support containing a code and/or a chip for opening communication channels with remote servers, through communication protocols (UMTS, TCP/IP, GPRS)**

(30) Priority: 27.08.2003 IT TO20030658
(71) Applicant: Bmedia di Alessandro Falcone e Michele Pastorini s.a.s., 10144 Torino (IT)
(72) Inventor: Falcone, Alessandro, Via Livorno, 60 10144 Torino (IT); Pastorini, Michele, Via Livorno, 60 10144 Torino (IT)
(74) Representative: Marchitelli, Mauro

(57) **Abstract**

The present invention relates to a label to be applied or to accompany products of various kinds. According to the present invention, the label is in the form of any type of support, in which, alternatively or jointly, the following are present:
- an alphanumeric code, which need not be immediately legible for the user, but hidden by means of a temporary covering system removable by the buyer of the product;
- a chip which, detached from said support, can be inserted into a reader (e.g. PDA, mobile telephone...). The chip can also remain integrated in the support and in this additional case the entire label can be inserted into a smart card reader.

Use of the code or of the chip by the user who purchased the product whereto the label is attached is functional for reception on any type of terminal and through any communication protocol (UMTS, TCP/IP, GPRS) of information, prepared by the producer or by the distributor, about the product whereto the label is associated.

## Description

The present invention relates to a label to be applied to or to accompany products of various natures to indicate their content, origin, or other characteristics.

Traditional labels are constituted by cards, tags or paper booklets or optical supports (mini CD) applied to the objects whose characteristics they have to identify.

Information currently present on a label is minimal and often unclear, mostly because of the reduced size of the paper support. This problem has been partially solved with the introduction of optical supports serving as labels.

An object of the present invention is to increase the quantity of information accessible by means of a label, in order to increase knowledge of the product by the user and to allow the buyer the use of services correlated to the product. An additional object of the present invention is to increase the buyer's satisfaction and his/her loyalty for the selling company.

According to the present invention, said object is achieved by a label characterised in that it is obtained in the form of any type of support in which, alternatively or jointly, the following are present:
- an alphanumeric code, which need not be immediately legible for the user, but hidden by means of a temporary covering system (e.g.: wax, paint, adhesive tape), removable by the buyer of the product;
- a chip of the SIM card type which, detached from said support, can be inserted into an appropriate reader (e.g., PDA, mobile telephone...). The chip can also remain integrated in the support and in this additional case the entire label can be inserted into a smart card reader.

Use of the code or of the chip by the user who purchased the product whereto the label is attached is functional for reception on any type of terminal and through any communication protocol (UMTS, TCP/IP, GPRS) of information, prepared by the producer or by the distributor, about the product whereto the label is associated.

The support constituting the label, according to the present invention, can be made of any material and can have any shape, provided it contains a code or a chip.

Systems that use codes or chips attached to products, to assure the authenticity of the product (anti-counterfeiting) are already known.

The document WO0072251 describes use of a smart card provided with microprocessor which can be placed in the label or in the seal of a commercial product to verify or authenticate the product.

The document CN1345000 describes an anti-counterfeit system, formed by an independent centralised computerised system, which produces random ciphered codes, on behalf of the various manufacturers who subscribe to the service. Said codes are placed on the products by means of labels. To verify the authenticity of the product, the buyer accesses the Website of the centralised computerised system and uses the code provided on the label to verify the manufacturer's identity.

An equivalent system is described in the document CN1243299 according to which each product is accompanied by a ciphered code which can be used by the purchaser of the product to query the manufacturer, via mail, telephone or Internet, about the authenticity of the product.

The use of codes inserted in labels attached to the products is proposed in other documents, not serving the anti-counterfeiting function, but that of providing information or for remote purchasing purposes.

The document US2002116212 describes a label with a code, whose code can be used for remotely purchasing (via the Internet, fax, telephone...) the product whereto the label and code belong. Since the label can be detached from the product, said system allows to purchase the product in a different physical location and time period from the one in which the product was viewed in the point of sale.

The document WO0242946 describes a hardware instrument, either portable or in the form of fixed kiosks in points of sale, aimed at supporting the consumer for the purchase decision. The insertion of a product code, both manually through the keyboard of the patented instrument, and through the integrated optical reading in the instrument of the bar code relating to the product, allows on line access to appropriate databases, which send information about the validity of the purchase of the product. This product evaluation system is mainly implemented by consumer associations. The information received by the potential consumer is substantiated with the lighting of a (visual or sound) indication on the instrument provided.

The document US5950173 describes a telecommunication system, supported by Internet technology both on the client side and on the server side, which provides any Internet user with multiple sources of information on a specific product, starting from a standard code (Universal Product Number - UPN) which the user can find on the label of the product itself. The document describes the equivalent functionality to an Internet search engine, but one whose search key is the Universal Product Number (UPN) and the result of the search is constituted by the Web pages (URL's) which can be symbolically connected to the code (UPN) and ultimately to the related product.

The document US2002016737 illustrates a commercial promotion method, whereby consumers can verify through the Internet whether the secret code, provided in the package or on the label attached to the purchased product, is a winning code. The remote server queries a database containing all codes relating to that specific promotion and provides an immediate response to the consumer about any win.

The characteristics and advantages of the present invention shall become readily apparent from the detailed description that follows, provided purely by way of non limiting example, with reference to the accompanying drawings in which:
- Figure 1 is a schematic view illustrating a label according to an embodiment of the present invention,
- Figure 2 is a schematic view of a variant of the label of Figure 1, and

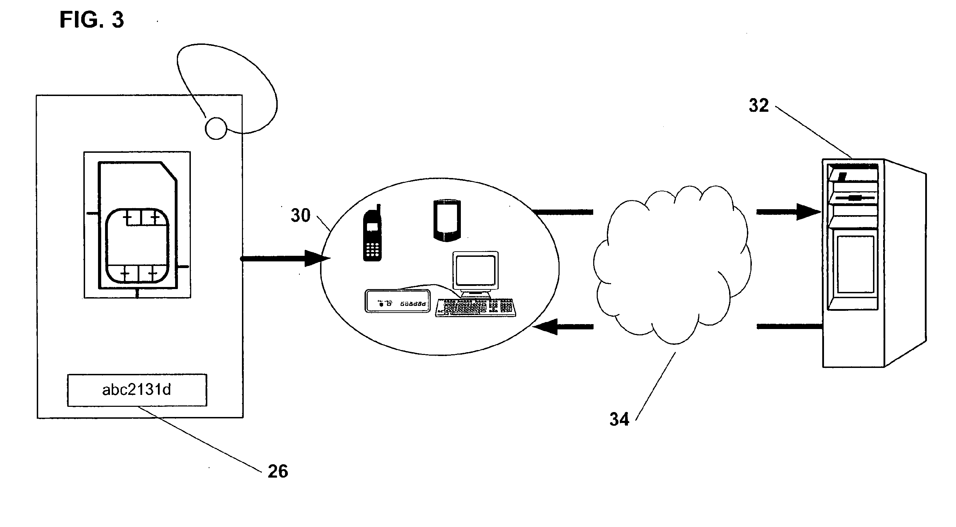

- Figure 3 is a schematic view of the communication system activated by the use of the code or of the chip integrated in the label.

With reference to the figures, the reference number 10 designates any support constituting the label of a product generically designated by the number 12. The label 10 according to the present invention can be used instead or in addition to a traditional paper label.

On a surface 14 of the label 10 can be printed summary information on the product 12, as in a normal paper label. The information printed on the face 14 can be, for example, the logo of the company, the image of the product, the size (in the case of clothing items), the price, etc.... On the other surface 14 of the label 10, in addition to further printed graphic elements, is present, alternatively or jointly, a microchip 24 and an alphanumeric code 26. The alphanumeric code 26, according to a preferred embodiment of the present invention, is hidden through some temporary covering system 28 (for example: wax, paint, enamel, adhesive tape), removable by the buyer of the product only after the purchase.

The microchip 24 may be detached from the support 10 to be inserted into an appropriate communication reader 30 (e.g., PDA, mobile telephone...).

In another variant of the present invention, the microchip 24 cannot be detached from the support 10 and therefore the entire support 10 may be inserted into a device 30 (e.g. smart card reader).

After purchasing the product 12 whereto the label 10 is attached, the buyer may access digital data of various kinds, about the product and/or the manufacturer company.

In the variant in which the label 10 is provided only with the alphanumeric code 26, the buyer, after purchasing the product 12, may remove the temporary covering system 28 of the code 26 and enter said code in an appropriate interface, provided by the company that manufactures or distributes the product 12. The means for accessing the interface is any communication device 30 that allows to encode and display the data (e.g.: Personal Digital Assistant, telephone with screen), or a normal computer provided with an Internet connection. Said interface may be simply a dedicated section of the Website of the company that manufactures or distributes the product 12, whose access is reserved only to the buyers who correctly enter the code 26 printed on the label 10. The Web address to access the interface of the company that manufactures or distributes the product 12 will be printed in the clear on the label 10.

An additional variant of the present invention consists of the access, by the buyer, to the information about the product 12 using the microchip 24, be it detachable from the support 10 or otherwise. The microchip 24 serves the same function as the alphanumeric code 26. The microchip 24, inserted in an appropriate reader of any communication device 30, allows the automatic authentication of the purchaser of the product 12 whereupon the information about the product 12 is transmitted, by the remote system 32, through any communication protocol 34.

Since the microchip 24 can autonomously contain a quantity of data, said microchip, in addition to allowing the transmission of the information about the product 12 from the remote system 32, can itself provide some information on the product 12, e.g. the text for the warranty and the statement of conformity of the product 12.

To be displayed, said data require any portable communication device 30, which enables to encode and display the data (e.g.: Personal Digital Assistant, telephone), or through a normal computer provided with an Internet connection.

For example, the digital data which may be sent to the purchaser from the remote system 32 are: the presentation of the product and its technical details, the operation and maintenance instructions (cleaning, servicing, viewing the spare parts catalogue), the indication of assistance centres or points of sale on the territory, viewing the catalogue of products that are complementary to the purchased one, the module for the activation of the warranty on the product, etc.. In particular, to comply with recent European directives in the field of the safeguard of consumers, the registration immediately after the purchase of the product bought by the consumer, through the present invention, allows to indicate a definite date, which proves the time wherefrom the consumer's protection is activated. If said registration system is anonymous, the buyer shall have to retain exclusively the label 10 as proof of purchase for the purposes of the replacement of any non conforming product.

The label according to the present invention enables the movable terminal or the electronic computer to receive information and to perform customer support services. For example, this type of interaction could comprise the following functions:
- transmission of the module for registering the customer and activating the product warranty by means of the connection to a database of an appropriate Website whereto it is possible to connect through the code or the chip incorporated in the label;
- on-line purchase of spare parts for the product, possibly after selecting the spare part from a catalogue which can be displayed thanks to the code or to the chip incorporated in the label;
- presentation of initiatives connected to the product, such as: agreements between the company manufacturing the product and third party companies for the delivery of products and/or services of potential interest for the type of buyers for whom the product is intended, information about events connectable by affinity to the product or to the buyer's lifestyle;
- participation in specific contests for the owners of the label who purchased the product;
- presentation of the news and updates pertaining to the product;
- on-line sale of products that are correlated or complementary to the purchased product (not necessarily by the same company);
- creation of virtual communities of interest;
- handling of complaints through the compilation of appropriate on-line modules.

The label 10 according to the present invention is connected to the product 12 by means of a clamp 18 or any other connection system normally used for traditional paper labels.

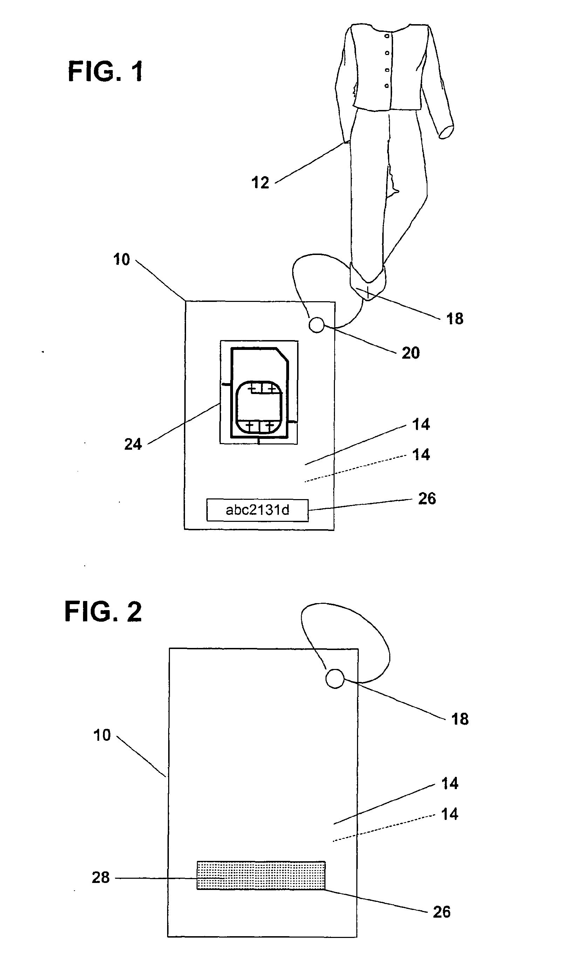

In the embodiment of Figure 1, the label 10 is provided with means for allowing its application to the product 12. Said means can for example be in the form of a hole 20 formed in a part of the label. Although the hole 20 constitutes the simplest system to apply the label 10 to the product 12, any other system, able to allow the application of the label to the product, may be adopted.

## Claims

1. A label **characterised in that** it is in the form of any support (10), in which, alternatively or jointly, the following are present:
- an alphanumeric code (26), which need not be immediately legible for the user, but hidden by means of a temporary covering system (28) removable by the buyer of the product;
- a chip (24) removable from the support
- a chip (24) permanently integrated in the support

2. Label as claimed in claim 1, **characterised in that** the code or the chip allow, through an appropriate fixed or movable communication device (30), to access a remote system (32), which sends to the device (30), through any communication protocol (34) information about the product whereto the label is destined to be associated.

3. Label as claimed in claim 1, **characterised in that** it comprises means (20) able to allow the application of said support on the product.

4. Label as claimed in claim 1, **characterised in that** the aforesaid information is in hypertext and multimedia form, comprising text, sounds, fixed or moving images.

5. Label as claimed in claim 1, **characterised in that** the information whereto it is possible to have access contains a presentation of the product and technical details thereof, and/or instructions for use of the product, and/or instructions for the maintenance of the product, and/or indications on product assistance centres or of points of sale, and/or catalogues relating to products that are complementary to those whereto the label is associated, and/or a module for activating the warranty on the product and/or the text of the warranty and of the statement of conformity of the product.

6. Label as claimed in claim 1, **characterised by** an interaction with a Website comprising the possibility of sending a form for registering the customer and activating the warranty on the product by interfacing to a database of the Website.

7. Label as claimed in claim 6, **characterised in that** the interaction with the Website comprises the possibility of completing on-line purchases of spare parts or for the maintenance of the product whereto the label is associated.

8. Label as claimed in claim 6, **characterised in that** the interaction with the Website comprises the presentation of initiatives connected to the product whereto the label is associated.

9. Label as claimed in claim 8, **characterised in that** the aforesaid initiatives connected to the product comprise conventions between the company that manufactured the product whereto the label is associated and third party companies, information about events connectable by affinity to the product, participation in on-line contests, presentation of news and updates relating to the product, on-line sale of products that are correlated or complementary to the product, creation of virtual communities of interest, advice by the user for improving the product, handling complaints by filling out appropriate on-line modules.

10. Label as claimed in claim 2, **characterised in that** it enables to access a remote system (32), which supplies the information about the product whereto it is attached, through any communication protocol (34) (UMTS, GPRS, TCP/IP).
